# EUROPÄISCHE PATENTSCHRIFT

(11) **EP 3 417 540 B1**
(45) Veröffentlichungstag und Bekanntmachung des Hinweises auf die Patenterteilung: **10.11.2021**
(21) Anmeldenummer: 16716534.9
(22) Anmeldetag: 12.04.2016
(51) Int. Cl.: H02M 7/49, H01G 4/06, H01G 4/12, H01G 4/14, H02M 7/483, H01G 4/20

(54) **ELEKTRISCHER KONDENSATOR**
ELECTRICAL CAPACITOR
CONDENSATEUR ÉLECTRIQUE

(43) Veröffentlichungstag der Anmeldung: 26.12.2018
(73) Patentinhaber: Siemens Energy Global GmbH & Co. KG, 81739 München (DE)
(72) Erfinder: EULER, Ingo, 91056 Erlangen (DE); PIESCHEL, Martin, 90473 Nürnberg (DE)
(86) Internationale Anmeldenummer: PCT/EP2016/058015
(87) Internationale Veröffentlichungsnummer: WO 2017/178040

(56) Entgegenhaltungen:
- EP-A1- 2 255 961
- DE-A1- 19 630 883
- DE-A1-102013 214 693
- DE-U1-202014 101 837
- US-A1- 2003 169 555
- US-A1- 2014 160 623
- SAEGUSA K: "PREPARATION AND ELECTRICAL PROPERTIES OF SOL-GEL DERIVED LEAD ZIRCONATE TITANATE GLASS-CERAMIC THIN FILMS ON METAL FOIL SUBSTRATES", JAPANESE JOURNAL OF APPLIED PHYSICS, JAPAN SOCIETY OF APPLIED PHYSICS, JP, Bd. 36, Nr. 11, PART 01, 1. November 1997 (1997-11-01), Seiten 6888-6893, XP001087802, ISSN: 0021-4922, DOI: 10.1143/JJAP.36.6888
- J. S. THORP ET AL: "The dielectric properties of glass-ceramic-on-metal substrates for microelectronics packaging", JOURNAL OF MATERIALS SCIENCE, Bd. 26, Nr. 19, 1. Januar 1991 (1991-01-01), Seiten 5367-5373, XP055327507, Dordrecht ISSN: 0022-2461, DOI: 10.1007/BF01143234

## Beschreibung

Die Erfindung betrifft einen Stromrichter mit einer Reihenschaltung aus einer Vielzahl von Modulen, welche jeweils mindestens zwei elektronische Schaltelemente und einen elektrischen Kondensator aufweisen. Der elektrische Kondensator hat ein Dielektrikum, das eine Folie aufweist.

Ein solcher Kondensator wird auch als Folienkondensator bezeichnet. Oftmals besteht die Folie aus Polypropylen. Je größer die benötigte elektrische Kapazität des Kondensators ist und je größer die benötigte Spannungsfestigkeit des Kondensators ist, desto größer ist auch der Kondensator, d.h. desto größer ist das Volumen und damit die Baugröße des Kondensators. Es gibt Anwendungsfälle für Kondensatoren, bei denen die Baugröße der Kondensatoren eine bedeutende Rolle spielt. Zu diesen Anwendungsfällen gehören elektrische Stromrichter, insbesondere elektrische Stromrichter bei Offshore-Anwendungen.

Stromrichter (power converter) sind leistungselektronische Schaltungen zum Umwandeln von elektrischer Energie. Mit Stromrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannungshöhe umgewandelt werden. Stromrichter können eine Vielzahl von gleichartigen Modulen (die auch als Submodule bezeichnet werden) aufweisen, welche elektrisch in Reihe geschaltet sind. Diese Module weisen jeweils mindestens zwei elektronische Schaltelemente und einen elektrischen Energiespeicher in Form eines elektrischen Kondensators auf. Solche Stromrichter werden als modulare Multilevelstromrichter bezeichnet und gehören zu den VSC-Stromrichtern (VSC = voltage sourced converter). Durch die elektrische Reihenschaltung der Module lassen sich hohe Ausgangsspannungen erreichen. Die Stromrichter sind einfach an unterschiedliche Spannungen anpassbar (skalierbar) und eine gewünschte Ausgangsspannung kann relativ genau erzeugt werden. Diese Stromrichter werden oftmals im Hochspannungsbereich eingesetzt, beispielsweise als Stromrichter bei Hochspannungs-Gleichstrom-Übertragungsanlagen oder als Blindleistungskompensatoren bei flexiblen Drehstromübertragungssystemen.

Solche Stromrichter weisen oftmals eine beträchtliche Größe auf. Abhängig vom Einsatzgebiet können die Kosten für den Grund und Boden bzw. für den umbauten Raum der Stromrichter erheblich sein. Insbesondere bei Offshore-Anlagen ist umbauter Raum teuer. Dazu kommen ggf. noch Kosten für die Klimatisierung, die auch mit der Größe der Stromrichter ansteigen können. Der elektrische Kondensator ist oftmals eines der größten Bauelemente in den Modulen eines solchen Stromrichters. Daher hat der Kondensator einen wesentlichen Einfluss auf die Größe der einzelnen Module und damit auf die Größe des Stromrichters. Ein Beispiel solcher Stromrichter ist in der DE 10 2013 214 693 A1 zu finden.

Aus der Schrift "Glass as dielectric for high temperature power capacitors" von Timothy J. Patey et al., Materials Research Society Symposium - Proceedings, Bd. 1679, 2014, S.20-25 ist bekannt, bei Kondensatoren anstelle von Polypropylen Glas als Dielektrikum einzusetzen. Solche Kondensatoren mit Glas als Dielektrikum sind wegen der Sprödigkeit von Glas jedoch aufwändig in der Herstellung und erfordern eine relativ große Dicke des Glases, um Fertigungsfehler auszugleichen. Dadurch haben solche Kondensatoren ein relativ großes Volumen und Gewicht.

Aus der Schrift "Preparation and Electrical Properties of Sol-Gel Derived Lead Zirconate Titanate Glass-Ceramic Thin Films on Metal Foil Substrates" von K. Saegusa, Japanese Journal of Applied Physics, Japanese Society of Applied Physics, Bd. 36, Nr.11, Part 1, 1. November 1997, Seiten 6888-6893 ist ein Dünnfilm-Kondensator bekannt, bei dem ein GlasKeramik-Dünnfilm auf einer Aluminium-, Titan- oder Stahlfolie aufgebracht ist. Aus der Druckschrift EP 2 255 961 A1 ist noch ein Dünnfilm-Kondensator bekannt, der geeignet für hohe Spannungen und Temperatur ist.

Der Erfindung liegt die Aufgabe zugrunde, einen Stromrichter anzugeben, bei dem der Kondensator (bezogen auf seine elektrische Kapazität und seine Spannungsfestigkeit) eine geringe Baugröße aufweist.

Diese Aufgabe wird erfindungsgemäß gelöst durch einen Stromrichter nach dem unabhängigen Patentanspruch. Vorteilhafte Ausführungsformen des Stromrichters sind in den abhängigen Patentansprüchen angegeben.

Offenbart wird ein elektrischer Kondensator mit einem Dielektrikum, das eine (flexible) Folie aufweist, die mit einer Glaskeramikschicht versehen ist. Es handelt sich dabei um einen Folienkondensator. Bei diesem Kondensator ist besonders vorteilhaft, dass die Folie mit einer Glaskeramikschicht versehen ist. Die Glaskeramik weist eine größere Dielektrizitätszahl εᵣ (relative Permittivität εᵣ) auf als beispielsweise Polypropylen. Dadurch kann dieser elektrische Kondensator eine größere elektrische Ladungsmenge speichern als ein Kondensator, dessen Dielektrikum vollständig aus Polypropylen besteht. Dadurch kann der Kondensator sehr kompakt aufgebaut werden und im Vergleich mit Kondensatoren mit einem glaskeramikfreien Dielektrikum wird eine geringere Baugröße erreicht. Der Kondensator ist so aufgebaut, dass die Glaskeramikschicht eine Dicke zwischen 1 nm und 10 nm aufweist. Aufgrund dieser geringen Dicke ist die Glaskeramikschicht flexibel und elastisch, so dass die Glaskeramikschicht zusammen mit der Folie aufgewickelt (aufgerollt) werden kann unter Bildung eines Folienwickels. Dadurch lässt sich dieser Kondensator in Folienwickel-Bauform realisieren.

Der Kondensator ist auch so ausgestaltet, dass die Folie eine Kunststofffolie ist. Die Folie, insbesondere die Kunststofffolie, bildet eine Trägerfolie für die Glaskeramikschicht. Durch ihre mechanische Stabilität ermöglicht die Kunststofffolie die Verwendung von einer sehr dünnen Glaskeramikschicht. Dadurch wird das Aufwickeln des Dielektrikums erleichtert und es wird eine geringe Baugröße des Kondensators ermöglicht.

Der Kondensator kann auch so ausgestaltet sein, dass die Folie mit einer Metallschicht versehen ist, die eine Elektrode des Kondensators bildet oder die Glaskeramikschicht mit einer Metallschicht versehen ist, die eine Elektrode des Kondensators bildet. Die Metallschicht kann dabei als eine Metallisierungsschicht unmittelbar auf die Folie oder auf die Glaskeramikschicht aufgebracht sein. Zwei derartig mit der Glaskeramikschicht und der Metallschicht versehene Folien können dann derart zu einem Folienwickel des Kondensators aufgewickelt werden, dass die beiden Folien benachbarte Lagen des Folienwickels bilden. Somit entsteht ein Kondensator, der zwei Metallschichten und damit zwei Elektroden aufweist. (Die mit der Glaskeramikschicht und der Metallschicht versehene Folie wird im Folgenden auch als Kondensatorstreifen bezeichnet.)

Der Kondensator kann auch so ausgestaltet sein, dass eine Seite der Folie (die erste Seite der Folie) mit der Glaskeramikschicht versehen ist und die gegenüberliegende Seite der Folie (die zweite Seite der Folie) mit einer weiteren Glaskeramikschicht versehen ist. Dies erlaubt es vorteilhafter Weise, bei unveränderter Dicke der Glaskeramikschichten zwischen zwei Elektroden des Kondensators die doppelte Menge an Glaskeramikmaterial anzuordnen. Dadurch lassen sich bei diesem Kondensator besonders große elektrische Kapazitäten pro Volumeneinheit erreichen. Dabei ist (aufgrund der unveränderten Dicke der Glaskeramikschichten) die Flexibilität der Glaskeramikschichten nicht verringert.

Der Kondensator kann auch so ausgestaltet sein, dass die Glaskeramikschicht mit einer Metallschicht versehen ist, die eine Elektrode des Kondensators bildet, oder die weitere Glaskeramikschicht mit einer Metallschicht versehen ist, die eine Elektrode des Kondensators bildet. Durch Ineinanderwickeln von zwei derartig ausgestalteten Kondensatorstreifen lässt sich der Kondensator mit den beiden Elektroden realisieren.

Der Kondensator kann auch so ausgestaltet sein, dass die Folie Polypropylen aufweist. Es handelt sich also um eine polypropylenhaltige Kunststofffolie, insbesondere um eine Polypropylenfolie. Polypropylen ist kostengünstig verfügbar und lässt sich gut verarbeiten. Außerdem weist Polypropylen die nötige mechanische Festigkeit auf, um die Glaskeramikschicht zu tragen.

Offenbart wird weiterhin der Stromrichter mit der Reihenschaltung aus einer Vielzahl von Modulen, welche jeweils mindestens zwei elektronische Schaltelemente und einen Kondensator nach einer der vorstehend beschriebenen Varianten aufweisen.

Offenbart wird weiterhin eine Hochspannungs-Gleichstrom-Übertragungsanlage mit einem solchen Stromrichter.

Offenbart wird weiterhin eine Blindleistungskompensationsanlage mit einem solchen Stromrichter.

Ein derartiger Stromrichter, eine derartige Hochspannungs-Gleichstrom-Übertragungsanlage und eine derartige Blindleistungskompensationsanlage weisen ähnliche Vorteile auf, wie sie oben im Zusammenhang mit dem Kondensator erläutert worden sind. Insbesondere lassen sich der Stromrichter, die Hochspannungs-Gleichstrom-Übertragungsanlage und die Blindleistungskompensationsanlage mit einer vergleichsweise geringen Baugröße realisieren.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines modularen Multilevelstromrichters, in
- Figur 2: ein Ausführungsbeispiel eines Moduls des Multilevelstromrichters, in
- Figur 3: ein weiteres Ausführungsbeispiel eines Moduls, in
- Figur 4: ein Ausführungsbeispiel einer Hochspannungs-Gleichstrom-Übertragungsanlage, in
- Figur 5: ein Ausführungsbeispiel einer Blindleistungskompensationsanlage, in
- Figur 6: eine schematische Darstellung eines Ausführungsbeispiels eines Kondensatorstreifens eines Kondensators, in
- Figur 7: eine schematische Darstellung eines Ausführungsbeispiels zweier Kondensatorstreifen eines Kondensators, in
- Figur 8: eine schematische Darstellung eines weiteren Ausführungsbeispiels eines Kondensatorstreifens eines Kondensators, in
- Figur 9: eine schematische Darstellung eines weiteren Ausführungsbeispiels eines Kondensatorstreifens eines Kondensators, in
- Figur 10: eine schematische Darstellung eines weiteren Ausführungsbeispiels eines Kondensatorstreifens eines Kondensators und in
- Figur 11: ein Ausführungsbeispiel einer Zusammenschaltung von mehreren Kondensatoren dargestellt.

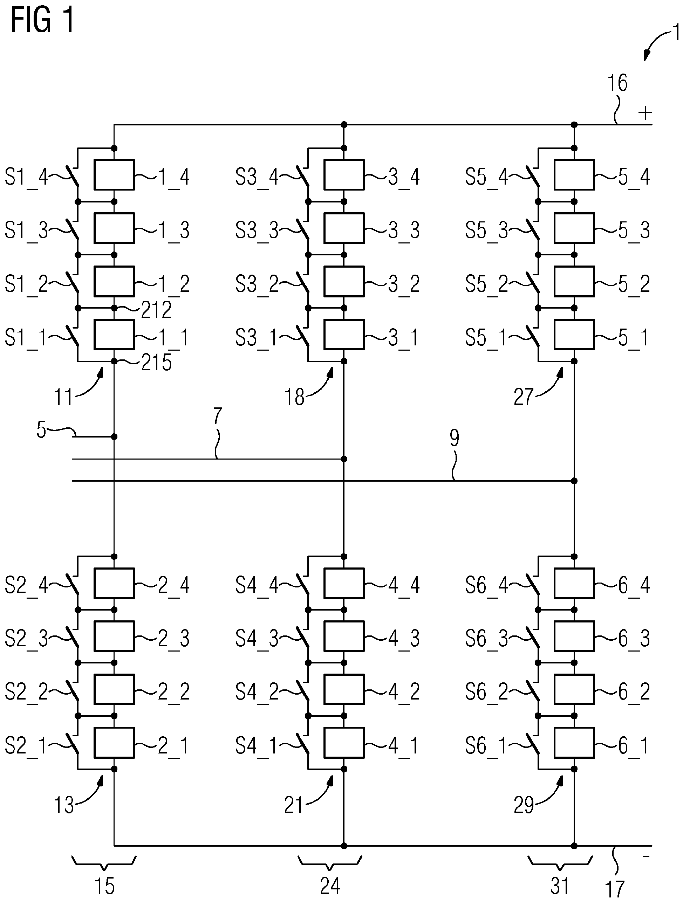

In Figur 1 ist ein Stromrichter 1 in Form eines modularen Multilevelstromrichters 1 (modular multilevel converter, MMC) dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden.

Jeder Phasenmodulzweig weist eine Mehrzahl von Modulen (1_1, 1_2, 1_3, 1_4; 2_1 ... 2_4; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig 4 Module (Stromrichter-Module) auf. Die Anzahl der (mittels ihrer galvanischen Stromanschlüsse) elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein.

Jedem Modul ist ein Schalter (Überbrückungsschalter, Bypassschalter) zugeordnet, der das Modul (bei einem Defekt des Moduls) überbrücken (kurzschließen) kann. Beispielsweise ist dem ersten Modul 1_1 ein erster Schalter S1_1 zugeordnet. Der erste Schalter S1_1 wird bei Auftreten eines Defekts an dem ersten Modul 1_1 von einer modulinternen Schalter-Ansteuereinrichtung angesteuert, daraufhin schließt der erste Schalter S1_1; das heißt, der erste Schalter S1_1 geht von dem geöffneten Schaltzustand in den geschlossenen Schaltzustand über. Jedes der Module des Stromrichters 1 ist mit einem Schalter versehen.

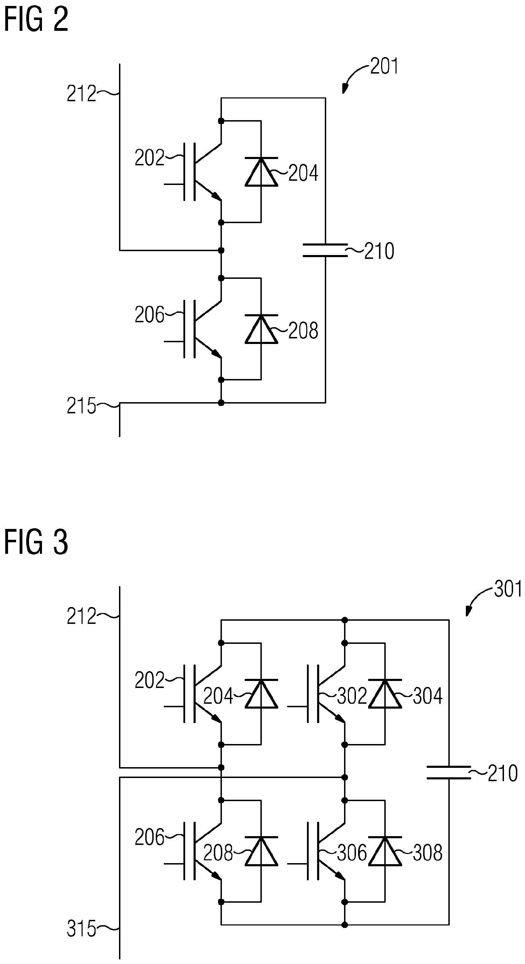

In Figur 2 ist beispielhaft der prinzipielle Aufbau eines Moduls 201 dargestellt. Dabei kann es sich beispielsweise um das Modul 1_1 des ersten Phasenmodulzweigs 11 (oder auch um eines der anderen in Figur 1 dargestellten Module) handeln. Das Modul ist als ein Halbbrücken-Modul 201 ausgestaltet. Das Modul 201 weist ein erstes ein- und abschaltbares Halbleiterventil 202 mit einer ersten antiparallel geschalteten Diode 204 auf. Weiterhin weist das Modul 201 ein zweites ein- und abschaltbares Halbleiterventil 206 mit einer zweiten antiparallel geschalteten Diode 208 sowie einen elektrischen Energiespeicher 210 in Form eines Kondensators 210 auf. Der Kondensator 210 ist ein unipolarer Kondensator 210 (unipolarer Speicherkondensator 210).

Das erste abschaltbare Halbleiterventil 202 ist ein erstes elektronisches Schaltelement 202; das zweite abschaltbare Halbleiterventil 206 ist ein zweites elektronisches Schaltelement 206. Das erste abschaltbare Halbleiterventil 202 und das zweite abschaltbare Halbleiterventil 206 kann jeweils als ein IGBT (insulated-gate bipolar transistor) ausgestaltet sein. Das erste abschaltbare Halbleiterventil 202 ist elektrisch in Reihe geschaltet mit dem zweiten abschaltbaren Halbleiterventil 206. Am Verbindungspunkt zwischen den beiden Halbleiterventilen 202 und 206 ist ein erster galvanischer Modulanschluss 212 angeordnet. An dem Anschluss des zweiten Halbleiterventils 206, welcher dem Verbindungspunkt gegenüberliegt, ist ein zweiter galvanischer Modulanschluss 215 angeordnet. Der zweite Modulanschluss 215 ist weiterhin mit einem ersten Anschluss des Energiespeichers 210 verbunden; ein zweiter Anschluss des Energiespeichers 210 ist elektrisch verbunden mit dem Anschluss des ersten Halbleiterventils 202, der dem Verbindungspunkt gegenüberliegt.

Der Energiespeicher 210 ist also elektrisch parallel geschaltet zu der Reihenschaltung aus dem ersten Halbleiterventil 202 und dem zweiten Halbleiterventil 206. Durch entsprechende Ansteuerung des ersten Halbleiterventils 202 und des zweiten Halbleiterventils 206 (zum Beispiel durch eine modulinterne elektronische Ansteuerschaltung) kann erreicht werden, dass zwischen dem ersten galvanischen Modulanschluss 212 und dem zweiten galvanischen Modulanschluss 215 entweder die Spannung des Energiespeichers 210 ausgegeben wird oder keine Spannung ausgegeben wird (das heißt eine Nullspannung ausgegeben wird). Durch Zusammenwirken der Module der einzelnen Phasenmodulzweige kann so die jeweils gewünschte Ausgangsspannung des Stromrichters erzeugt werden.

In Figur 3 ist ein weiteres Ausführungsbeispiel eines Moduls 301 dargestellt. Bei diesem Modul 301 kann es sich beispielsweise um das Modul 1_2 (oder auch um eines der anderen in Figur 1 dargestellten Module) handeln. Neben dem bereits aus Figur 2 bekannten ersten Halbleiterventil 202, zweiten Halbleiterventil 206, erster Diode 204, zweiter Diode 208 und Energiespeicher 210 (Kondensator 210) weist das in Figur 3 dargestellte Modul 301 ein drittes ein- und abschaltbares Halbleiterventil 302 mit einer antiparallel geschalteten dritten Diode 304 sowie ein viertes ein- und abschaltbares Halbleiterventil 306 mit einer vierten antiparallel geschalteten Diode 308 auf. Das dritte abschaltbare Halbleiterventil 302 ist ein drittes elektronisches Schaltelement 302; das vierte abschaltbare Halbleiterventil 306 ist ein viertes elektronisches Schaltelement 306. Das dritte abschaltbare Halbleiterventil 302 und das vierte abschaltbare Halbleiterventil 306 kann jeweils als ein IGBT ausgestaltet sein. Im Unterschied zur Schaltung der Figur 2 ist der zweite galvanische Modulanschluss 315 nicht mit dem zweiten Halbleiterventil 206 elektrisch verbunden, sondern der zweite galvanische Modulanschluss 315 ist mit einem Mittelpunkt einer elektrischen Reihenschaltung aus dem dritten Halbleiterventil 302 und dem vierten Halbleiterventil 306 elektrisch verbunden.

Das Modul 301 der Figur 3 ist ein sogenanntes Vollbrücken-Modul 301. Dieses Vollbrücken-Modul 301 zeichnet sich dadurch aus, dass bei entsprechender Ansteuerung der vier Halbleiterventile zwischen dem ersten galvanischen Modulanschluss 212 und dem zweiten galvanischen Modulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Stromrichter 1 kann entweder nur Halbbrücken-Module 201, nur Vollbrücken-Module 301 oder auch Halbbrücken-Module 201 und Vollbrücken-Module 301 aufweisen. Anstelle des beschriebenen Halbbrücken-Moduls oder des beschriebenen Vollbrücken-Moduls kann es sich bei dem Modul auch um ein anderes Modul handeln, beispielsweise um ein Mehrlevel-Modul, das mehrere Kondensatoren als Energiespeicher aufweist, wobei die Spannungen der Kondensatoren unterschiedlich kombiniert werden können.

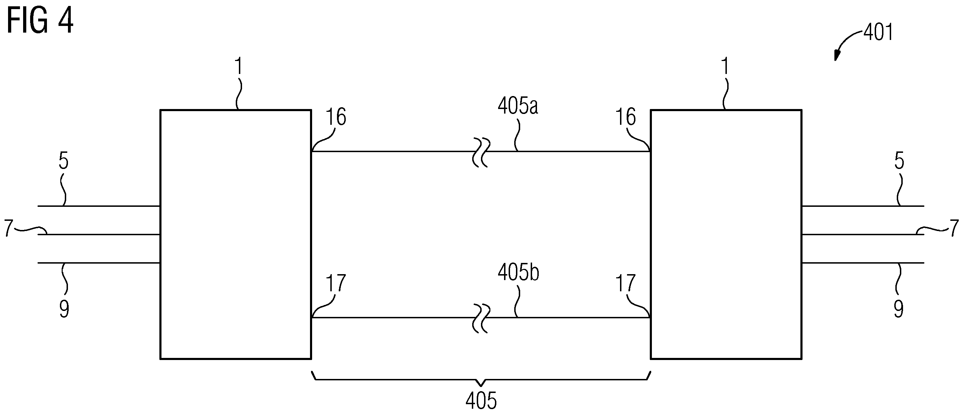

In Figur 4 ist schematisch ein Ausführungsbeispiel einer Hochspannungs-Gleichstrom-Übertragungsanlage 401 dargestellt. Diese Hochspannungs-Gleichstrom-Übertragungsanlage 401 weist zwei Stromrichter 1 gemäß der Figur 1 auf. Diese beiden Stromrichter 1 sind gleichspannungsseitig über eine Hochspannungs-Gleichstrom-Verbindung 405 elektrisch miteinander verbunden. Dabei sind die beiden positiven Gleichspannungsanschlüsse 16 der Stromrichter 1 mittels einer ersten Hochspannungs-Gleichstrom-Leitung 405a elektrisch miteinander verbunden; die beiden negativen Gleichspannungsanschlüsse 17 der beiden Stromrichter 1 sind mittels einer zweiten Hochspannungs-Gleichstrom-Leitung 405b elektrisch miteinander verbunden. Mittels einer derartigen Hochspannungs-Gleichstrom-Übertragungsanlage 401 kann elektrische Energie über weite Entfernungen übertragen werden; die Hochspannungs-Gleichstrom-Verbindung 405 weist dann eine entsprechende Länge auf.

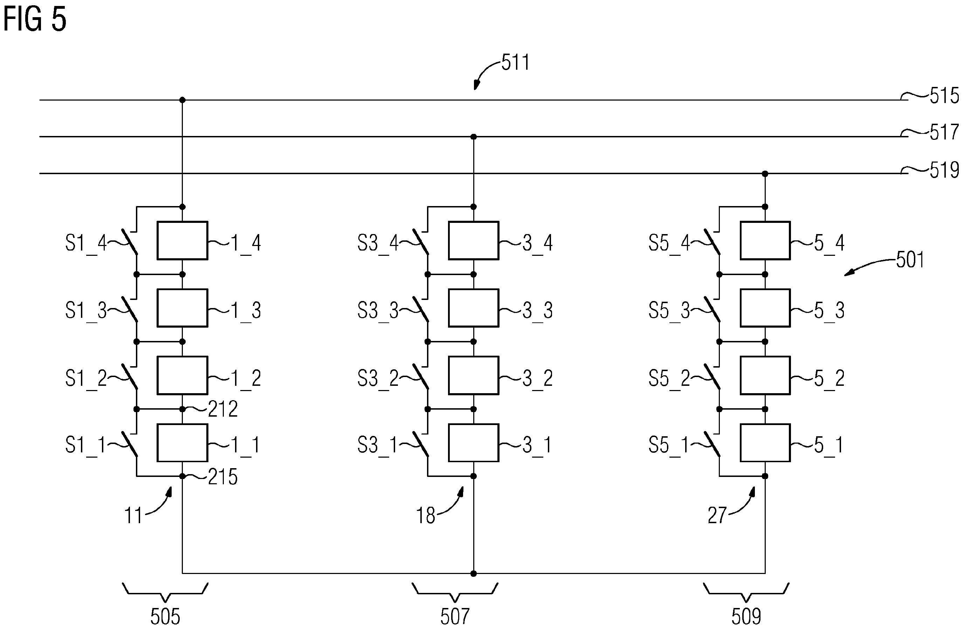

In Figur 5 ist ein Ausführungsbeispiel eines Stromrichters 501 dargestellt, welcher als ein Blindleistungskompensator 501 dient. Dieser Stromrichter 501 weist lediglich die drei Phasenmodulzweige 11, 18 und 27 auf, welche drei Phasenmodule 505, 507 und 509 des Stromrichters bilden. Die Anzahl der Phasenmodule 505, 507 und 509 entspricht der Anzahl der Phasen eines Wechselspannungsnetzes 511, an das der Stromrichter 501 angeschlossen ist.

Die drei Phasenmodulzweige 11, 18 und 27 sind sternförmig miteinander verbunden. Das dem Sternpunkt entgegengesetzte Ende der drei Phasenmodulzweige ist mit jeweils einer Phasenleitung 515, 517 und 519 des dreiphasigen Wechselspannungsnetzes 511 elektrisch verbunden. (Die drei Phasenmodule 505, 507 und 509 können in einem anderen Ausführungsbeispiel anstelle in Sternschaltung auch in Dreieckschaltung geschaltet sein.) Der Stromrichter 501 kann das Wechselspannungsnetz 511 mit Blindleistung versorgen oder Blindleistung aus dem Wechselspannungsnetz 511 entnehmen.

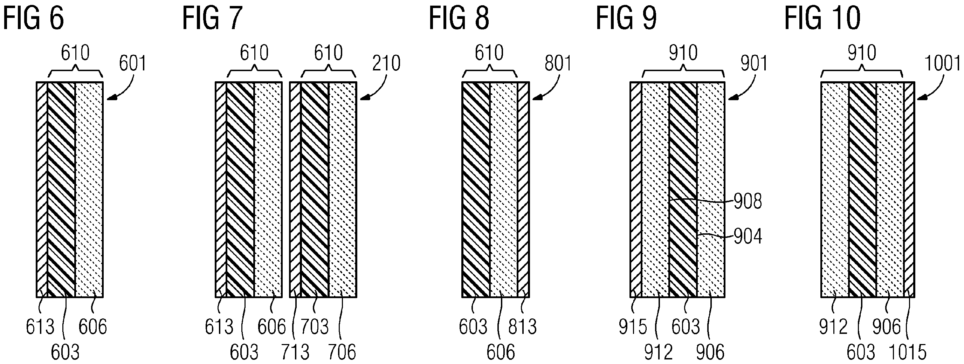

In Figur 6 ist schematisch ein Ausführungsbeispiel eines Kondensatorstreifens 601 eines elektrischen Kondensators dargestellt. Dieser elektrische Kondensator ist ein Folienkondensator. Dieser elektrische Kondensator ist zum Beispiel der in den Figuren 2 und 3 dargestellte Kondensator 210 des Moduls des Stromrichters. Figur 6 zeigt eine Schnittdarstellung eines Ausschnitts aus dem Kondensatorstreifen (im abgewickelten Zustand).

Der Kondensatorstreifen 601 des Folienkondensators weist eine Folie 603 auf, auf die eine Glaskeramikschicht 606 aufgebracht ist. Die Folie 603 ist dabei eine Trägerfolie 603 für die Glaskeramikschicht 606. Die Folie 603 und die Glaskeramikschicht 606 bilden ein Dielektrikum 610 des Kondensators. Dabei bilden die Folie 603 und die Glaskeramikschicht 606 einen Verbundstoff. Dieser Verbundstoff stellt das Dielektrikum 610 des Kondensators dar. Die Folie 603 ist (einseitig) mit einer Metallschicht 613 (Metallisierungsschicht 613) versehen. Die Metallschicht 613 bildet eine Elektrode des Kondensators.

Die Folie 603 ist eine Kunststofffolie 603, vorzugsweise eine Polypropylenfolie 603. Diese Kunststofffolie 603 ist mit der Glaskeramikschicht 606 (Glaskeramikbeschichtung 606) versehen. Die Glaskeramikschicht 606 als Beschichtung auf der Folie 603 ist deshalb vorteilhaft, weil sich dadurch ein relativ elastischer Verbundstoff bzw. Verbundwerkstoff ergibt, welcher aufgewickelt werden kann. Dadurch ist die Sprödigkeit der Glaskeramik als solche nicht nachteilig bei der Herstellung des Kondensators. Eine solche Glaskeramik kann beispielsweise Titanate oder Oxide aufweisen, insbesondere Titanoxid, Siliziumoxid, Aluminiumoxid, Bariumtitanat oder Barium-Strontium-Titanat. Die Glaskeramik kann keramische Partikel, die von Glas umhüllt sind, aufweisen.

Bei der Herstellung des Kondensators werden zwei Kondensatorstreifen gemäß Figur 6 gemeinsam aufgewickelt unter Bildung eines gemeinsamen Wickels (Folienwickels). Dies erfolgt derart, dass die beiden Kondensatorstreifen benachbarte Lagen des Wickels bilden.

In Figur 7 ist ein Ausschnitt aus einem derartigen Wickel mit zwei Kondensatorstreifen dargestellt. Linksseitig in Figur 7 ist der erste Kondensatorstreifen 601 dargestellt, welcher aus der Folie 603, der Glaskeramikschicht 606 und der Metallschicht 613 besteht. Rechtsseitig in Figur 7 ist ein zweiter Kondensatorstreifen dargestellt, welcher aus einer zweiten Folie 703, einer zweiten Glaskeramikschicht 706 und einer zweiten Metallschicht 713 besteht. Die Metallschicht 613 bildet die erste Elektrode des Kondensators; die zweite Metallschicht 713 bildet die zweite Elektrode des Kondensators. Figur 7 zeigt also einen Ausschnitt aus dem Kondensator, insbesondere einen Ausschnitt aus dem Kondensator 210 der Figuren 2 und 3.

In Figur 8 ist ein weiteres Ausführungsbeispiel eines Ausschnitts aus einem Kondensatorstreifen 801 dargestellt. Dieser Kondensatorstreifen 801 weist die Folie 603 mit der Glaskeramikschicht 606 auf. Auf der Glaskeramikschicht 606 ist eine Metallschicht 813 (Metallisierungsschicht 813) aufgebracht. Die Folie 603 und die Glaskeramikschicht 606 bilden das Dielektrikum 610. Das Ausführungsbeispiel der Figur 8 unterscheidet sich vom Ausführungsbeispiel der Figur 6 nur dadurch, dass die Metallschicht nicht auf der Folie 603, sondern auf der Glaskeramikschicht 606 aufgebracht ist.

In Figur 9 ist ein weiteres Ausführungsbeispiel eines Kondensatorstreifens 901 des Kondensators dargestellt. Dieser Kondensatorstreifen 901 weist die Folie 603 auf. Eine erste Seite 904 der Folie 603 ist mit einer ersten Glaskeramikschicht 906 versehen. Eine zweite Seite 908 der Folie 603 (die der ersten Seite 904 gegenüberliegenden zweite Seite 908) ist mit einer zweiten Glaskeramikschicht 912 versehen. Die Folie 603 ist also beidseitig mit je einer Glaskeramikschicht versehen: mit der ersten Glaskeramikschicht 906 und der zweiten Glaskeramikschicht 912. Die zweite Glaskeramikschicht 912 weist eine Metallschicht 915 (Metallisierungsschicht 915) auf, welche eine Elektrode des Kondensators bildet. Die Folie 603 mit der ersten Glaskeramikschicht 906 und der zweiten Glaskeramikschicht 912 bilden ein Dielektrikum 910 des Kondensators.

In Figur 10 ist ein weiteres Ausführungsbeispiel eines Kondensatorstreifens 1001 des Kondensators dargestellt. Dieser Kondensatorstreifen 1001 unterscheidet sich von dem Kondensatorstreifen 901 der Figur 9 lediglich dadurch, dass die zweite Glaskeramikschicht 912 nicht mit einer Metallschicht versehen ist (metallschichtfreie zweite Glaskeramikschicht 912) und dass die erste Glaskeramikschicht 906 mit einer Metallschicht 1015 versehen ist.

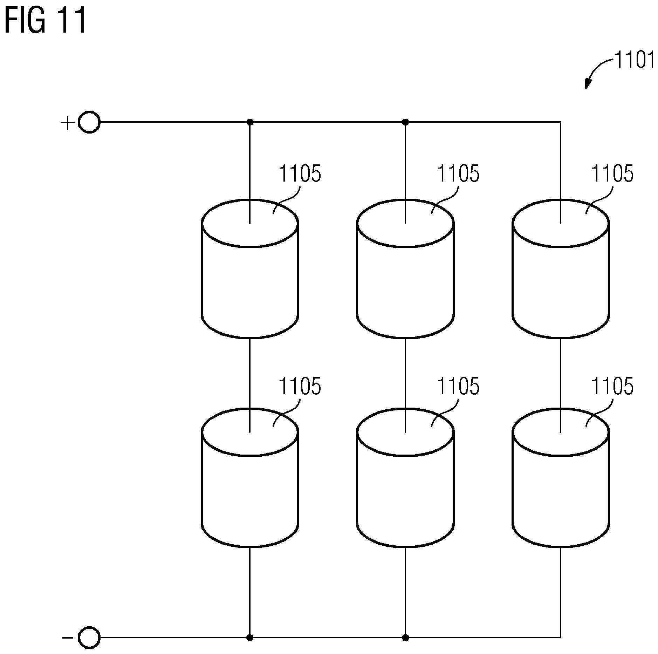

In Figur 11 ist ein Ausführungsbeispiel eines Kondensators 1101 dargestellt. Der Kondensator 1101 weist eine Mehrzahl von Wickeln 1105 (Folienwickel 1105) auf, welche teilweise elektrisch in Reihe geschaltet sind und teilweise elektrisch parallel geschaltet sind. Dabei sind im Ausführungsbeispiel jeweils zwei der Wickel elektrisch in Reihe geschaltet. Drei dieser Reihenschaltungen sind elektrisch parallel geschaltet. In einem anderen Ausführungsbeispiel kann ein Kondensator aber auch nur aus in Reihe geschalteten Wickeln, aus parallel geschalteten Wickeln oder aus nur einem Wickel bestehen.

Die beschriebenen Kondensatoren weisen eine Reihe von Vorteilen auf. Aufgrund der Verwendung der Glaskeramikschicht weisen sie eine relativ hohe Temperaturfestigkeit auf, daher werden weniger Aufwände zur Klimatisierung benötigt und die Lebensdauer der Kondensatoren wird verlängert. Aufgrund der Glaskeramikschicht mit der relativ großen relativen Permittivität εᵣ wird wenig Folienfläche (wenig Kondensatorfläche) benötigt, um eine vorgegebene elektrische Kapazität zu realisieren. Dadurch lässt sich ein kompakter Aufbau der Kondensatoren realisieren und diese Kondensatoren weisen eine geringe Baugröße auf.

Es wurde ein elektrischer Kondensator beschrieben, welcher bezogen auf seine elektrische Kapazität eine geringe Baugröße aufweist. Mit diesem elektrischen Kondensator wird ein Stromrichter aufgebaut, welcher eine geringe Baugröße aufweist. Mit diesem elektrischen Kondensator können insbesondere Hochspannungs-Gleichstrom-Übertragungsanlagen oder Blindleistungskompensationsanlagen aufgebaut werden, welche ebenfalls eine geringe Baugröße aufweisen. Dadurch lässt sich der Platzbedarf für Kondensatoren, Stromrichter und die genannten Anlagen klein halten, was (insbesondere bei Offshore-Anwendungen) zu erheblichen Kostenvorteilen führen kann.

## Patentansprüche

1. Stromrichter (1) mit einer Reihenschaltung aus einer Vielzahl von Modulen (1_1, 1_2, 1_3, ...), welche jeweils mindestens zwei elektronische Schaltelemente (202, 206) und einen elektrischen Kondensator (210) aufweisen,
wobei der elektrische Kondensator (210) ein Dielektrikum (610) aufweist, **dadurch gekennzeichnet, dass** das Dielektrikum (610) eine Folie (603) aufweist, die mit einer Glaskeramikschicht (606) versehen ist, wobei
- die Glaskeramikschicht (606) eine Dicke zwischen 1 nm und 10 nm aufweist, und
- die Folie (603) eine Kunststofffolie ist.

2. Stromrichter nach Anspruch 1, wobei die Folie (603) mit einer Metallschicht (613) versehen ist, die eine Elektrode des Kondensators (210) bildet oder die Glaskeramikschicht (606) mit einer Metallschicht (813) versehen ist, die eine Elektrode des Kondensators (210) bildet.

3. Stromrichter nach einem der vorhergehenden Ansprüche, wobei eine Seite (904) der Folie (603) mit der Glaskeramikschicht (906) versehen ist und die gegenüberliegende Seite (908) der Folie (603) mit einer weiteren Glaskeramikschicht (912) versehen ist.

4. Stromrichter nach Anspruch 3, wobei die Glaskeramikschicht (906) mit einer Metallschicht (1015; versehen ist, die eine Elektrode des Kondensators bildet, oder die weitere Glaskeramikschicht (912) mit einer Metallschicht (915) versehen ist, die eine Elektrode des Kondensators bildet.

5. Stromrichter nach einem der vorhergehenden Ansprüche, wobei die Folie (603) Polypropylen aufweist.

6. Hochspannungs-Gleichstrom-Übertragungsanlage (401) mit einem Stromrichter (1) nach einem der Ansprüche 1 bis 5.

7. Blindleistungskompensationsanlage (501) mit einem Stromrichter (1) nach einem der Ansprüche 1 bis 5.

## Claims

1. Power converter (1) having a series circuit comprising a multiplicity of modules (1_1, 1_2, 1_3, ...) that each have at least two electronic switching elements (202, 206) and an electrical capacitor (210),
wherein the electrical capacitor (210) has a dielectric (610), **characterized in that** the dielectric (610) has a film (603) that is provided with a glass-ceramic layer (606), wherein
- the glass-ceramic layer (606) has a thickness of between 1 nm and 10 nm, and
- the film (603) is a plastic film.

2. Power converter according to Claim 1, wherein the film (603) is provided with a metal layer (613) that forms an electrode of the capacitor (210) or the glass-ceramic layer (606) is provided with a metal layer (813) that forms an electrode of the capacitor (210).

3. Power converter according to either of the preceding claims, wherein one side (904) of the film (603) is provided with the glass-ceramic layer (906) and the opposite side (908) of the film (603) is provided with a further glass-ceramic layer (912).

4. Power converter according to Claim 3, wherein the glass-ceramic layer (906) is provided with a metal layer (1015) that forms an electrode of the capacitor, or the further glass-ceramic layer (912) is provided with a metal layer (915) that forms an electrode of the capacitor.

5. Power converter according to one of the preceding claims, wherein the film (603) comprises polypropylene.

6. High-voltage DC transmission installation (401) having a power converter (1) according to one of Claims 1 to 5.

7. Reactive power compensation installation (501) having a power converter (1) according to one of Claims 1 to 5.

## Revendications

1. Convertisseur (1) de courant ayant un circuit série, composé d'une pluralité de modules (1_1, 1_2, 1_3, ...), qui ont chacun au moins deux éléments (202, 206) électroniques de coupure et un condensateur (210) électrique,
dans lequel le condensateur (210) électrique a un diélectrique (610), **caractérisé en ce que** le diélectrique (610) a une feuille (603) qui est pourvue d'une couche (606) en vitrocéramique, dans lequel
- la couche (606) en vitrocéramique a une épaisseur comprise entre 1 nm et 10 nm et
- la feuille (603) est une feuille de matière plastique.

2. Convertisseur de courant suivant la revendication 1,
dans lequel
la feuille (603) est pourvue d'une couche (613) métallique, qui forme une électrode du condensateur (210) ou la couche (606) de vitrocéramique est pourvue d'une couche (813) métallique, qui forme une électrode du condensateur (210).

3. Convertisseur de courant suivant l'une des revendications précédentes,
dans lequel
- une face (904) de la feuille (603) est pourvue de la couche (906) de vitrocéramique et la face (908) opposée de la feuille (603) est pourvue d'une autre couche (912) de vitrocéramique.

4. Convertisseur de courant suivant la revendication 3,
dans lequel
la couche (906) de vitrocéramique est pourvue d'une couche (1015) métallique, qui forme une électrode du condensateur ou l'autre couche (912) de vitrocéramique est pourvue d'une couche (915) métallique, qui forme une électrode du condensateur.

5. Convertisseur de courant suivant l'une des revendications précédentes,
dans lequel
- la feuille (603) a du polypropylène.

6. Installation (401) de transport de courant continu à haute tension, ayant un convertisseur (1) de courant suivant l'une des revendications 1 à 5.

7. Installation (501) de compensation de puissance réactive ayant un convertisseur (1) de courant suivant l'une des revendications 1 à 5.
